## Europäisches Patentamt
## European Patent Office
## Office européen des brevets

(19)

(11) Numéro de publication : **0 375 509 B1**

# FASCICULE DE BREVET EUROPEEN

(12)

(45) Date de publication du fascicule du brevet :
**24.07.91 Bulletin 91/30**

(51) Int. Cl.$^5$ : **B60R 16/02**

(21) Numéro de dépôt : **89403457.8**

(22) Date de dépôt : **13.12.89**

(54) **Dispositif de fixation de tubes rigides et de nappes souples sur un véhicule automobile.**

(30) Priorité : **16.12.88 FR 8817357**

(43) Date de publication de la demande :
**27.06.90 Bulletin 90/26**

(45) Mention de la délivrance du brevet :
**24.07.91 Bulletin 91/30**

(84) Etats contractants désignés :
**DE ES GB IT**

(56) Documents cités :
**EP-A- 0 283 714**
**DE-A- 3 337 596**
**DE-U- 8 021 380**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Nicolas, Jean**
**6-8, rue des Cailloux**
**F-92110 Clichy (FR)**

(74) Mandataire : **Boivin, Claude**
**9, rue Edouard-Charton**
**F-78000 Versailles (FR)**

EP 0 375 509 B1

Jouve, 18, rue Saint-Denis, 75001 PARIS

## Description

La présente invention concerne un dispositif pour assurer la fixation de tubes rigides et d'une ou plusieurs nappes souples sur une paroi de véhicule automobile, par exemple sous le plancher de ce véhicule.

Ce dispositif comprend d'une part des supports fixés à la paroi et maintenant à la fois les tubes rigides et la nappe souple et d'autre part des supports fixés aux tubes rigides et empêchant la nappe souple de s'écarter de la paroi et d'être en contact avec les tubes.

On a décrit ci-après, à titre d'exemple non limitatif, un mode de réalisation du dispositif selon l'invention, avec référence aux dessins annexés dans lesquels :

La Figure 1 est une vue en coupe verticale et longitudinale d'un plancher de véhicule sous lequel des tubes rigides et des nappes souples sont fixés à l'aide du dispositif selon l'invention ;

La Figure 2 est une vue en coupe verticale suivant II-II de la Figure 1 ;

La Figure 3 est une vue en coupe suivant III-III de la Figure 1 ;

La Figure 4 est une vue par en dessous du support permettant de maintenir sous le plancher les tubes rigides et la ou les nappes souples ;

La Figure 5 est une vue semblable à la Figure 4 d'une variante d'utilisation ;

La Figure 6 est une vue par en dessous d'un support fixé aux tubes et maintenant la ou les nappes souples ;

La Figure 7 est une vue par en dessous et arrière montrant la fixation des tubes rigides et d'une nappe souple au droit du raccordement du plancher avec la tôle formant planche à talons ;

La Figure 8 montre le plancher en coupe longitudinale suivant VIII-VIII de la Figure 9.

La Figure 9 est une coupe suivant IX-IX de la Figure 8.

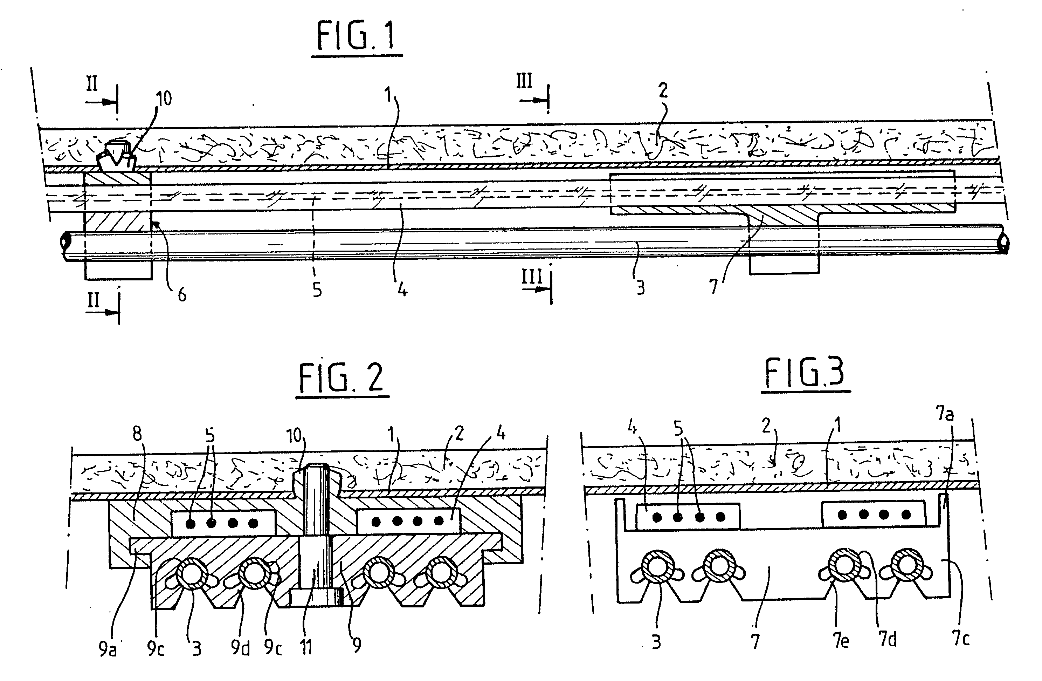

Aux Figures 1 à 3, on voit la tôle de plancher 1 d'un véhicule automobile, qui est recouverte d'un garnissage 2. Sous le plancher 1 sont disposés des tubes rigides 3 et des nappes souples 4, ces dernières étant par exemple constituées par des conducteurs électriques 5 noyés dans un enrobage en matière plastique. Des supports 6 fixés au plancher 1 maintiennent en place les tubes 3 et les nappes 4 ; par ailleurs des supports 7 fixés aux tubes 3 maintiennent les nappes souples 4 à proximité du plancher 1 et éloignées des tubes.

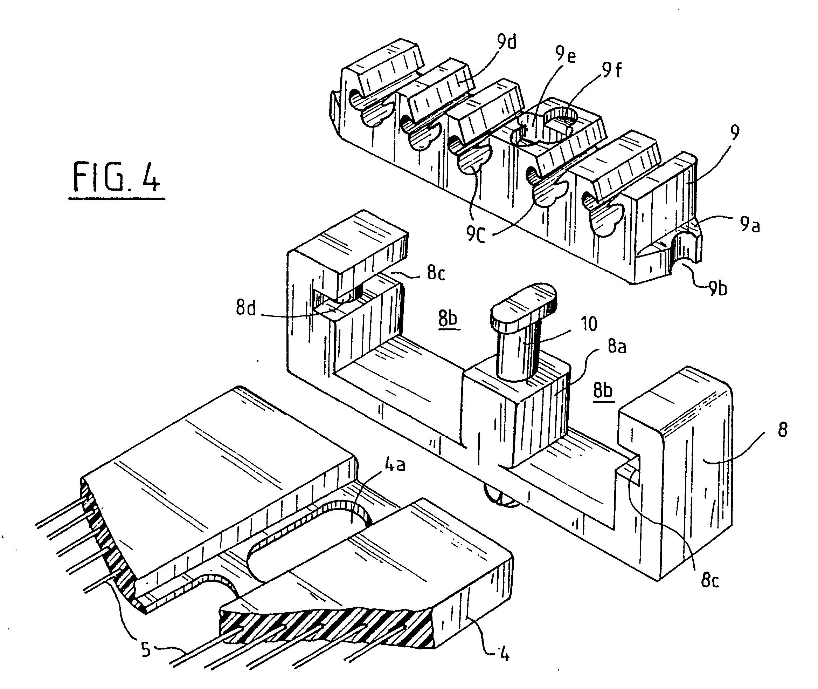

Comme on le voit plus particulièrement à la Figure 4, chacun des supports 6 comprend un bloc 8 et un verrou 9. Le bloc 8 présente un bossage central 8a de part et d'autre duquel se trouvent deux évidements 8b ; la nappe souple 4 présente des ouvertures 4a régulièrement espacées dont la largeur est sensiblement égale à celle du bossage 8a et a elle-même une largeur sensiblement égale à celle de l'ensemble des évidements 8b ; la nappe souple 4 peut ainsi être engagée dans le bloc 8, le bossage 8a de celui-ci traversant une ouverture 4a.

Le verrou 9 est réalisé en une matière plastique flexible et présente des extrémités amincies 9a qui peuvent être engagées dans des rainures 8c du bloc 8 qui débouchent dans les évidements 8b sensiblement à hauteur de la face supérieure du bossage 8a qui sert alors de support à la partie centrale du verrou. Dans la partie médiane de chaque rainure 8c est prévu un bossage cylindrique 8d qui s'engage dans une encoche 9b prévue à l'extrémité amincie 9a, ce qui empêche un déplacement transversal du verrou. Celui-ci comporte une série de trous cylindriques 9c, au diamètre des tubes 3, qui débouchent à l'extérieur et dont les bords présentent des lèvres de retenue 9d.

L'ensemble des pièces 8 et 9 peut être fixé sous le plancher par un rivet plastique comprenant un élément extérieur 10 et un élément intérieur 11, l'élément extérieur 10 faisant partie intégrante de la pièce 8. L'élément extérieur peut être enfilé dans un trou de bossage central 8a et dans un trou du plancher. L'élément intérieur 11, quand il est emmanché dans l'élément 10 assure l'épanouissement de l'extrémité de cet élément et son ancrage au plancher ; la tête de l'élément intérieur 11 a une forme ovale et peut traverser une ouverture 9e de forme correspondante prévue dans le verrou 9.

Pour fixer les tubes 3 et la nappe 4 sous le plancher 1, on engage la nappe 4 dans le bloc 8, on recouvre cette nappe du verrou 9, on met en place le rivet plastique 10-11, et on fait pivoter de 90° l'élément intérieur 11 dont la tête s'engage dans des encoches borgnes 9f flanquant l'ouverture 9e. Il ne reste plus qu'à encastrer les tubes 3 dans les trous 9c du verrou 9.

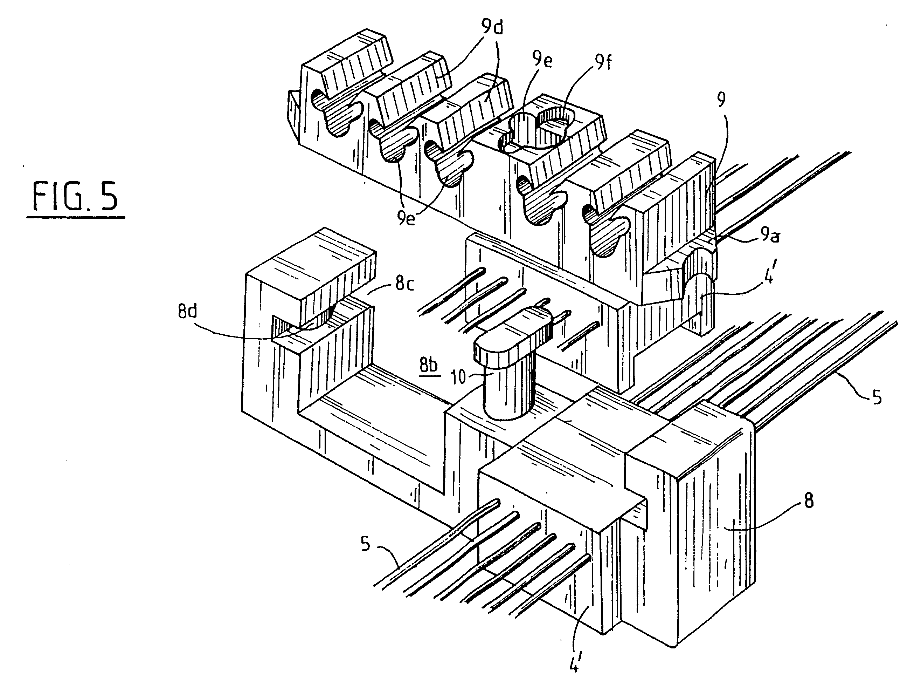

Dans la variante de la Figure 5, la nappe continue 4 est remplacée par une série de pavés 4' réunis les uns aux autres par des conducteurs 5. Chaque pavé se loge dans un évidement 8b et est maintenu en place par le verrou 9.

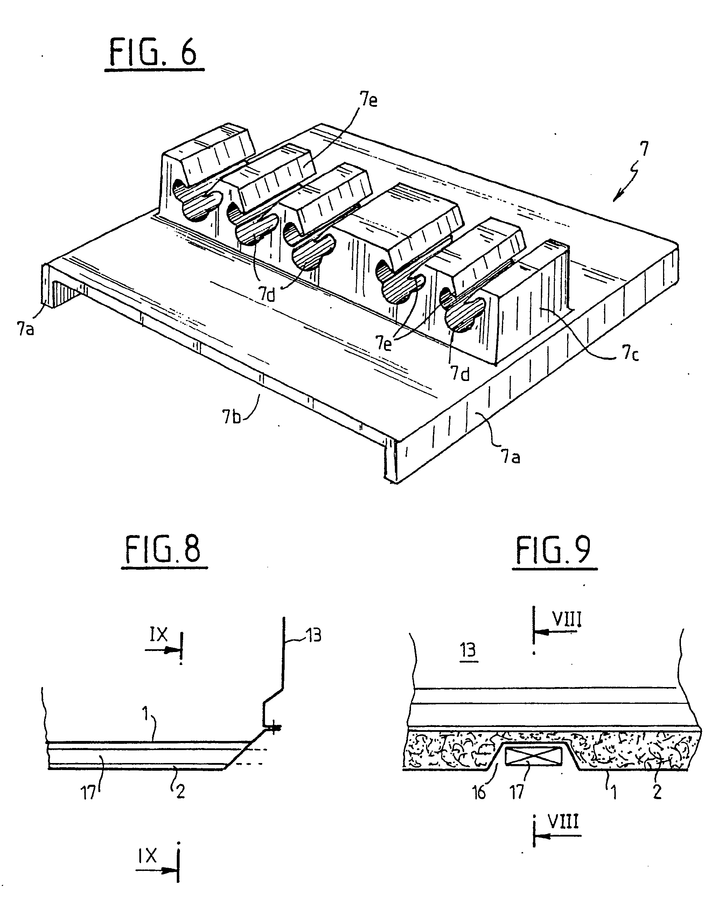

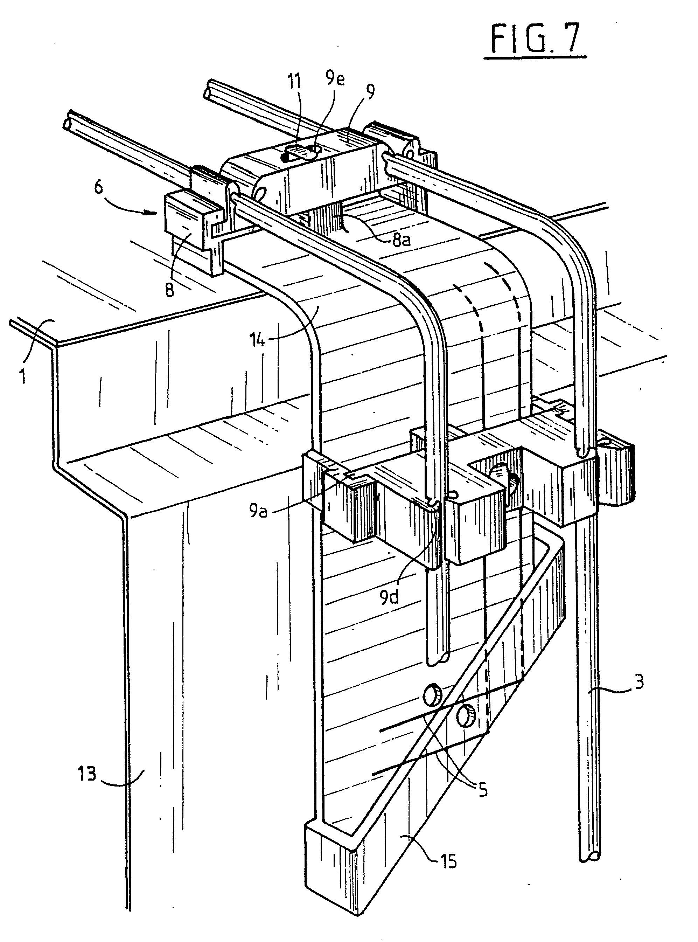

Comme on le voit à la Figure 6, chaque support 7 présente sur sa face tournée vers le plancher 1 des ailes 7a à 90° qui délimitent un espace 7b permettant le passage de la nappe 4 ou du pavé 12. Sur sa face opposée, le support 7 présente un bossage transversal 7c qui comporte une série de trous cylindriques 7d qui débouchent à l'extérieur et dont les bords présentent des lèvres de retenue 7e, ces trous 7d étant analogues aux trous 9c. Les supports 7 se montent sur les tubes 3, par exemple des canalisations hydrauliques, constituant ainsi le faisceau. Ce dernier se positionne et se fixe sur les pièces 9. Les supports 7 évitent les contacts entre la ou les nappe(s) 4 et le faisceau de tubes.

La Figure 7 montre le raccordement du plancher 1 à la tôle 13 formant planche à talons. Dans cette Figure, dans laquelle la nappe souple 4 n'a pas éré représentée dans un but de clarté, les blocs 8 disposés de part et d'autre de l'arête de raccordement du plancher 1 et de la tôle 13 sont réunis entre eux par un support de protection auxiliaire 14. De préférence, ils font partie intégrante de ce support. Sous la partie supérieure de ce support, celui-ci fait corps avec une règle oblique 15 suffisamment écartée du support pour permettre le passage de la nappe souple 4 ; cette règle permet de modifier l'orientation de la nappe, comme cela est schématisé pour un conducteur 5 de cette nappe.

Le plancher 1 et son garnissage 2 peuvent présenter un évidement longitudinal 16 (voir Figure 8 et 9) dans lequel peut venir se loger l'ensemble 17 formé par les tubes 3 et les nappes souples 4, avec leurs supports 6 et 7 ; on évite ainsi une diminution de la garde au sol et assure une meilleure protection des faisceaux électrique et hydraulique. Les Figures 7 et 8 montrent que la protection des faisceaux est assurée tout en conservant un bord d'assemblage rectiligne entre le plancher et la planche à talons et en respectant les cotes de garde au sol et de hauteur disponible intérieurement.

## Revendications

1. Dispositif de fixation de tubes rigides (3) et d'au moins une nappe souple (4) sur une paroi d'un véhicule automobile, caractérisé en ce qu'il comprend d'une part des supports (6) fixés à la paroi et maintenant à la fois les tubes rigides (3) et la nappe souple (4) et d'autre part des supports (7) fixés aux tubes rigides (3) et empêchant la nappe souple (4) de s'écarter de la paroi.

2. Dispositif selon la revendication 1, caractérisé en ce que chacun des supports (6) fixés à la paroi et maintenant à la fois les tubes rigides (3) et la nappe souple (4) comprend un bloc (8) comportant au moins un évidement (8b) propre à recevoir une nappe souple (4), et un verrou (9) propre à maintenir la nappe (4) dans l'évidement, pouvant être fixé sur le bloc (8) et muni d'orifices de maintien (9e) des tubes rigides (3).

3. Dispositif selon la revendication 2, caractérisé en ce que le bloc (8) présente un bossage central (8a) de part et d'autre duquel se trouvent deux évidements (8b).

4. Dispositif selon la revendication 2 ou 3, caractérisé en ce que le verrou (9) est réalisé en une matière plastique flexible et en ce que ses extrémités (9a) peuvent être engagées dans des rainures (8c) du bloc (8).

5. Dispositif selon l'une des revendications 2 à 4, caractérisé en ce que le bloc (8) et le verrou (9) sont fixés à la paroi par un rivet plastique (10-11).

6. Dispositif selon la revendication 5, caractérisé en ce que le rivet comprend un élément extérieur (10) faisant partie intégrante dudit bloc (8) et un élément intérieur d'expansion (11) dont la tête peut traverser une ouverture (9e) de forme correspondante du verrou (9) et être verrouillée par pivotement.

7. Dispositif selon l'une quelconque des revendications 1 à 6, caractérisé en ce que chaque support (7) fixé aux tubes rigides (3) pour empêcher la nappe souple (4) de s'écarter de la paroi présente sur sa face tournée vers la paroi des ailes (7a) délimitant un espace permettant le passage de la nappe souple (4) et sur sa face opposée des orifices de maintien (7d) des tubes rigides (3).

8. Dispositif selon l'une quelconque des revendications 2 à 7, caractérisé en ce que plusieurs blocs (8) sont réunis entre eux par un support de protection auxiliaire (14) dont ils font partie intégrante.

9. Dispositif selon la revendication 8, caractérisé en ce que le support (14) fait corps avec une règle oblique (15) suffisamment écartée du support pour permettre le passage de la nappe souple (4).

10. Plancher de véhicule qui comporte un évidement longitudinal (16) propre à recevoir un ensemble formé par les tubes rigides (3) et la nappe souple (4), caractérisé en ce que cet ensemble est fixé au plancher par le dispositif selon l'une quelconque des revendications 1 à 9.

## Patentansprüche

1. Vorrichtung zum Befestigen von starren Röhren (3) und wenigstens einem biegsamen Bündel (4) an einer Wandung eines Kraftfahrzeuges, **dadurch gekennzeichnet,** daß sie einerseits Träger (6), die an der Wandung befestigt sind und gleichzeitig die starren Röhren (3) und das biegsame Bündel (4) festhalten, und andererseits Träger (7) umfaßt, die an den starren Röhren (3) befestigt sind, und verhindern, daß sich das biegsame Bündel (4) von der Wandung entfernt.

2. Vorrichtung nach Anspruch 1, **dadurch gekennzeichnet,** daß jeder der Träger (6), die an der Wandung befestigt sind und gleichzeitig die starren Röhren (3) und das biegsame Bündel (4) festhalten, einen Block (8) mit wenigstens einer Aussparung (8b), die geeignet zur Aufnahme eines biegsamen Bündels (4) ist, und einen Riegel (9) aufweist, der geeignet ist, das Bündel (4) in der Aussparung festzuhalten, wobei er am Block (8) befestigt werden kann und mit Öffnungen (9e) zur Halterung der starren Röhren (3) versehen ist.

3. Vorrichtung nach Anspruch 2, **dadurch gekennzeichnet,** daß der Block (8) eine zentrale Erhöhung (8a) aufweist, beiderseits von der sich zwei Aussparungen (8b) befinden.

4. Vorrichtung nach Anspruch 2 oder 3, **dadurch gekennzeichnet,** daß der Riegel (9) aus biegsamem Kunststoff hergestellt ist und seine Enden (9a) in Nuten (8c) des Blocks (8) eingreifen können.

5. Vorrichtung nach einem der Ansprüche 2 bis 4, **dadurch gekennzeichnet, daß** der Block (8) und der Riegel (9) an der Wandung durch einen Kunststoffniet (10-11) befestigt sind.

6. Vorrichtung nach Anspruch 5, **dadurch gekennzeichnet, daß** der Niet einen Außenteil (10), der einen integrierenden Teil des Blocks (8) bildet, und einen irreren Aufspreizteil (11) aufweist, dessen Kopf eine Öffnung (9e) entsprechender Form des Riegels (9) durchdringen und durch Verdrehen verriegelt werden kann.

7. Vorrichtung nach einem der Ansprüche 1 bis 6, **dadurch gekennzeichnet, daß** jeder Träger (7), der an den starren Röhren (3) befestigt ist, um zu verhindern, daß sich das blegsame Bündel (4) von der Wandung entfernt,auf seiner der Wandung zugewandten Seite Flansche (7a), die einen Zwischenraum begrenzen, welcher den Durchlaß für das biegsame Bündel (4) ermöglicht, und auf seiner gegenüberliegenden Seite Öffnungen (7d) zur Halterung der starren Röhren (3) aufweist.

8. Vorrichtung nach einem der Ansprüche 2 bis 7, **dadurch gekennzeichnet, daß** mehere Blöcke (8) miteinander durch eine zusätzliche Schutzabdeckung (14) zusammengefügt sind, mit der sie eun Stück bilden.

9. Vorrichtung nach Anspruch 8, **dadurch gekennzeichnet, daß** die Abdeckung (14) mit einer querlaufenden Leiste (15) ein Stück bildet, die einen genügenden Abstand von der Abdeckung für den Durchlaß des biegsamen Bündels (4) ermöglicht.

10. Fahrzeugboden mit einer längsverlaufenden Aussparung (16), die geeignet ist, eine aus den starren Röhren (3) und dem biegsamen Bündel (4) gebildete Einheit aufzunehmen, **dadurch gekennzeichnet, daß** diese Einheit am Boden durch die Vorrichtung nach einem der Ansprüche 1 bis 9 befestigt ist.

## Claims

1. Device for securing rigid tubes (3) and at least one flexible cover (4) to one wall of a motor vehicle, wherein it firstly includes supports (6) fixed to the wall and supporting both the rigid tubes (3) and the flexible cover (4), and secondly supports (7) fixed to the rigid tubes (3) and preventing the flexible cover (4) from moving away from the wall.

2. Device according to claim 1, wherein each of the supports (6) fixed to the wall and supporting both the rigid tubes (3) and the flexible cover (4) include a block (8) comprising at least one recess (8b) able to receive one flexible cover (4) and one lock (9) able to retain the cover (4) in the recess and able to be secured to the block (8) and provided with orifices (9e) for maintaining the rigid tubes (3).

3. Device according to claim 2, wherein the block (8) has one central boss (8a), two recesses (8b) being situated on both sides of said boss.

4. Device according to claim 2 or 3, wherein the lock (9) is made of flexible plastic and wherein its extremities may be engaged in grooves (8c) of the block (8).

5. Device according to any one of claims 2 to 4, wherein the block (8) and the lock (9) are fixed to the wall by means of a plastic rivet (10-11).

6. Device according to claim 5, wherein the rivet includes one external element (10) forming an integral part of said block (8) and one internal expansion element (11) whose head is able to traverse one opening (9e) having the same shape as the lock (9) and being able to be pivot-locked.

7. Device according to any one of claims 1 to 6, wherein each support (7) fixed to the rigid tubes (3), so as to prevent the flexible cover (4) from moving away from the wall has, on its face orientated towards the wall, wings (7a) delimiting a space allowing for passage of the flexible cover (4) and, on its opposing face, orifices (7d) for maintaining the rigid tubes (3).

8. Device according to any one of claims 2 to 7, wherein several blocks (8) are interconnected by an auxiliary protection support (14) forming an integral part of these blocks.

9. Device according to claim 8, wherein the support (14) forms a body with an oblique rod (15) sufficiently distanced from the support so as to allow for passage of the flexible cover (4).

10. Vehicle floor which comprises a longitudinal recess (16) able to receive a unit formed by the rigid tubes (3) and the flexible cover (4), wherein this unit is fixed to the floor by the device according to any one of claims 1 to 9.

## FIG.1

## FIG.2

## FIG.3

EP 0 375 509 B1

FIG. 4

EP 0 375 509 B1

FIG. 5

9d  9e  9f  9

9e

9a

4'

8c

8d

8b  10

5

5

8

4'

EP 0 375 509 B1

## FIG. 6

7e

7

7a

7d

7e

7d

7c

7b

7a

## FIG.8

IX

13

1

17

2

IX

## FIG.9

VIII

13

16    17    1    2

VIII

FIG. 7